# EUROPEAN PATENT APPLICATION

(11) **EP 1 014 662 A2**
(43) Date of publication of application: **28.06.2000**
(21) Application number: 99309721.1
(22) Date of filing: 03.12.1999
(51) Int. Cl.: H04M 3/493

(54) **Access to documents of multimedia information with keywords**

(30) Priority: 23.12.1998 US 220067
(71) Applicant: NORTEL NETWORKS CORPORATION, Montreal, Quebec H2Y 3Y4 (CA)
(72) Inventor: Oberai, Sumit, Toronto, Ontario M5S 3A6 (CA); Adelman, Jason, Toronto, Ontario M4R 1Y9 (CA); Okun, Stephen J., Toronto, Ontario M4S 1T4 (CA); Hewson, Timothy J., Toronto, Ontario M4S 1C6 (CA); Miezitis, Mara A., Toronto, Ontario M5G 1G7 (CA)
(74) Representative: Dearling, Bruce Clive

(57) **Abstract**

A method and apparatus for using keywords associated with multimedia information as the basis for providing callers with access to the documents. Documents may be transmitted to callers by way of a pre-recorded voice message, a synthesized voice message, a facsimile, or an e-mail message. The invention also provides a caller with the ability to queue documents on a master queue prior to transmission or to receive abstracts of documents.

## Description

### FIELD OF THE INVENTION

The present invention relates to auto-generation of multimedia computer telephony integration applications by using keywords. In particular, the invention concerns the use of keywords associated with documents of multimedia information as the basis for providing callers with access to the documents.

### BACKGROUND OF THE INVENTION

Computer Telephony Integration (CTI) is the exchange of commands and messages between computers and telephone systems, allowing the two to work together. It is the functional integration of many computing and telephony capabilities including telephone networking, voice processing, data processing, fax, E-mail, database operations, and other computer applications. CTI products and methods are relevant in call centre, multimedia messaging, call logging, call management, call screening, conference management, call routing, telemarketing and preview or predictive outbound calling.

In one typical CTI application a person (caller) makes a telephone call to a CTI device. The CTI device may be customer premises equipment or may be attached to a device such as a PBX. Alternatively, the CTI device may be attached to a node or a switch in a telephone network. A session between the caller and the CTI device consists of a series of queries and responses between the caller and the CTI device. The purpose of the session is to provide the caller with information stored in, or accessible by, the CTI device. For example, the information could relate to particular products or services sold by the owner of the CTI device which were of interest to the person calling the CTI device. Such information may include a voice message, a fax, letter, or e-mail about a particular feature of a product or service. The caller provides information via the handset and keypad, also called the telset, to the CTI device. The CTI device uses the information provided by the caller to determine which information previously stored in the CTI device should be sent to the caller. The information could be sent to the telset, to a fax, via e-mail or surface mail.

One problem faced in designing this type of CTI application is organizing the information stored in the CTI device in a way that the information can be efficiently and effectively retrieved by a caller. Most present CTI devices have difficulty presenting selections to a caller, especially when many items of information are stored in, or accessible by, the CTI device.

Two standard approaches that are presently used to provide access to information via the telset are voice menus and Audiotext. In the case of menus, the administrator creates a hierarchical list of selections in advance. The menu approach suffers from many drawbacks: the administrator must decide which items are the most likely to be selected (to provide them as earlier selections); callers must listen to lengthy prompts describing the selections; and, callers are often forced to navigate through multiple menus before reaching their choice and then must navigate back to make more selections. These problems make the menu user interface awkward, especially when many selections are available, and also when new information is added as a complete reworking of the menus may be required.

With Audiotext, callers enter a string of digits corresponding to their selection, thus allowing a caller to choose from a large number of items. However, this requires callers to be aware of an identification number for each selection in advance, which is usually done by first sending the caller a catalogue with all selections. This catalogue represents the entire set of items rather than just the subset that the user is interested in (at that moment). Moreover, Audiotext requires the maintenance and distribution of a separate catalogue which is costly to the service provider and a nuisance for both system administration and callers.

### SUMMARY OF THE INVENTION

In accordance with an aspect of the present invention there is provided a method of selectively retrieving information stored in a computer telephony integration device wherein said information is stored as at least one document; and at least one keyword is associated with each of said documents;
said associated keywords forming a list;
said method comprising the steps of:
   (a) prompting a caller to speak at least one keyword;
   (b) receiving said spoken keyword from said caller;
   (c) comparing said spoken keywords with said list of keywords associated with said documents; and
   (d) transmitting to said caller said documents associated with said spoken keywords.

In accordance with another aspect of the present invention there is provided a method of retrieving information stored in a computer telephony integration device;
said information stored as at least one document;
at least one keyword is associated with each of the said documents;
said associated keywords forming a list;
said method comprising the steps of:
   (a) prompting a caller to speak at least one keyword;
   (b) receiving said spoken keywords from said caller;
   (c) comparing said spoken keywords to a list of keywords associated with said documents;
   (d) queuing on a master queue said documents associated with said spoken keywords; and,
   (e) transmitting to said caller said documents on said master queue.

In accordance with another aspect of the present invention there is provided a method of retrieving information stored in a computer telephony integration device;
said information stored as at least one document;
at least one keyword is associated with each of said documents;
said associated keywords forming a list;
each of said documents associated with an abstract;
said method comprising the steps of:
   (a) prompting a caller to speak at least one keyword;
   (b) receiving said spoken keywords from said caller;
   (c) comparing said spoken keywords to a list of keywords associated with said documents;
   (d) queuing on a master queue abstracts associated with said documents associated with said spoken keywords on a master queue; and,
   (e) transmitting to said caller said abstracts on said master queue.

In accordance with another aspect of the present invention there is provided a method of retrieving information stored in a computer telephony integration device;
wherein said information stored as at least one document; and
at least two keywords are associated with each of said documents;
said associated keywords forming a list;
said method comprising the steps of:
   (a) prompting a caller to speak at least one keyword;
   (b) receiving said spoken keywords from said caller;
   (c) comparing said spoken keywords to a list of keywords associated with said documents;
   (d) identifying a set of documents associated with said spoken keywords;
   (e) comparing other keywords associated with documents in said set of documents;
   (f) creating a list of subcategory keywords comprising other keywords in one document in said set of documents which match other keywords in at least one other document in said set of documents; and
   (g) transmitting said list to said caller.

In accordance with another aspect of the present invention there is provided a method of a computer telephony integration device comprising:
(a) means for storing at least one document;
(b) means for associating each of said documents with at least one keyword;
(c) means for forming a list of said associated keywords;
(d) prompting a caller to speak at least one keyword;
(e) receiving said spoken keywords from said caller;
(f) comparing said spoken keywords to a list of keywords associated with said documents; and
(g) transmitting to said caller said documents associated with said spoken keywords.

An advantage of the present invention is that administrators of CTI devices no longer have to create complicated menu structures themselves. Rather, they can simply associate all items with keywords and then the caller can use keywords to select information items stored on the CTI device.

The present invention advantageously provides auto-generation of multimedia computer telephony integration applications by using keywords.

A further advantage of the present invention is that it allows callers to navigate more directly to information pages stored on the CTI device.

### BRIEF DESCRIPTION OF THE FIGURES

Exemplary embodiments of the present invention will now be described with reference to the drawings in which:
Figure 1 shows a communication system of a preferred embodiment of the present invention; and,
Figure 2 shows a table in accordance with a preferred embodiment of the present invention.

### DETAILED DESCRIPTION OF THE PREFERRED EMBODIMENTS

In the detailed description of the invention the following acronyms are used:
DTMF - Dual Tone Multi Frequency - touch tones generated by a telset keypad. This is the term used to describe the user interface on most present day telephones. Alternative user interfaces are speech recognition, ADSI (see below), rotary dial phones, etc.
FOD - Fax on Demand - services to select and receive faxes (generally from a collection) via the Telset.
IVR - Interactive Voice Response - telephony services that interact with callers e.g. voice menus, fax on demand, database access, call control, etc.
ADSI - Analog Display Services Interface - Data Communications Protocol that allows display telephony sets to run custom applications such as on-screen spelling and menu selection via hotkeys.

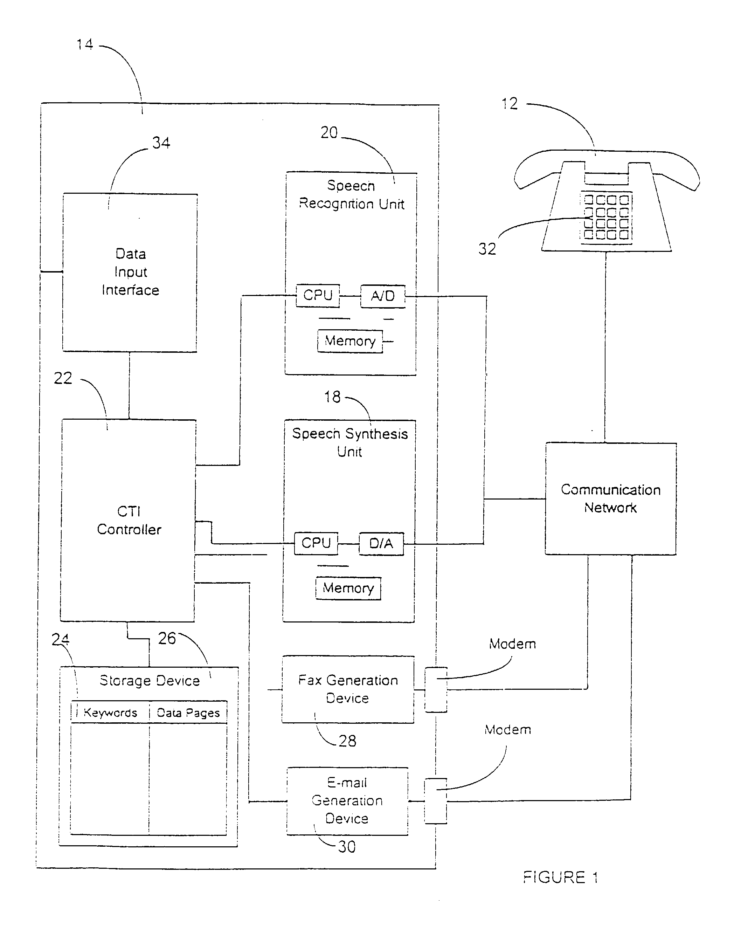

Referring to Figure 1:

In one embodiment of the present invention the following steps occur:
1. A caller using handset 12 makes a call to the CTI device 14 via a communications network 16.
2. Speech synthesis unit 18 within CTI device 14 plays a greeting to the caller, and prompts the caller to utter a keyword.
3. The caller speaks a keyword.
4. Speech recognition unit 20 within CTI device 14 receives the keyword spoken by the caller and generates a digital signal, such as a series of ASCII characters, corresponding to the keyword, and sends that digital signal to CTI controller 22.
5. CTI controller 22 then queries an associated table 24 of Keyword, received in storage device 26. The digital signal corresponding to the keyword is compared to keywords stored in table 24. Each document stored in storage device 26 has associated with it a number of keywords. When the caller says a keyword associated with a document, that document is queued up for possible transmission to the caller.
6. Speech synthesis unit 18 then creates a message to be sent to the caller. The message could indicate that none of the documents stored in the CTI device correspond to the keyword spoken by the caller. If documents stored on the CTI device do correspond to the keyword spoken by the caller, the caller is told the number of matches and then is asked whether they wish to receive all documents, receive a list summarizing the documents, or further refine their search to reduce the number of documents. Refinement of the search and generation of a list will be described below.
7. The caller responds indicating what information they want CTI device 14 to send to them. This response could be by way of a word spoken by caller, a DTMF tone, or an ADSI hotkey.
8. Speech recognition unit 20 receives the response and generates a digital signal corresponding to the response and sends the digital signal to CTI controller 22. Steps 6-8 are repeated if necessary.
9. CTI controller 22 accesses table 24 and retrieves the required information from table 24 or from another storage location in storage device 26.
10. CTI device 14 transmits requested information to the caller via the speech synthesis unit 18, fax generation device 28, and/or e-mail generation device 30.

In a preferred embodiment of the present invention, after the caller inputs the first keyword to the CTI device 14 and if documents exist in storage device 26 corresponding to that keyword, the caller can then further refine their search. The following steps indicate how a refined search can be performed:
A. The caller is asked by a message generated by speech synthesis unit 18 and transmitted over communication network 16 to handset 12 if they wish to further refine their search.
B. The caller indicates they wish to further refine their search by way of inputting a command, such as by speaking the word "refine" or by pressing a particular number on the keypad 32 of Telset 12.
C. Speech recognition unit 20 receives the command, generates a digital signal corresponding to the command, and sends the digital signal to CTI controller 22.
D. CTI controller 22 sends a command to speech synthesis unit 18 to generate and send a prompt to the caller. For example, the caller could be asked to say a second keyword.
E. The caller says a second keyword.
F. The second keyword is received by speech recognition unit 20 which generates a digital signal, such as a series of ASCII characters corresponding to the keyword, and sends the digital signal to CTI controller 22.
G. CTI controller them queries associated table 24. The digital signal corresponding to the second keyword is compared to keywords associated with documents already associated with the first keyword input earlier. If documents have associated with them both the first keyword and the second keyword (i.e. first keyword AND second keyword, where AND is the boolean operator AND), those pages are queued up for possible transmission to the caller.
H. The method then proceeds as set out in previously described steps 6, 7, and 8.

In a preferred embodiment of the present invention an administrator could input a threshold number via data input interface 34. The threshold number is the maximum number of pages of information that can be queued in response to a keyword query. If the threshold number is exceeded, the caller will be prompted to refine their search.

Keywords can be associated with pages of information in a number of different ways. The most simple method would be to have an administrator enter keywords to be associated with each document. For example, the administrator could set up a template, (a list of categories of keywords), such as model number and model name, to be associated with each document.

Alternatively, the pages could be scanned and keywords could be auto-generated in the following manner:
Natural language understanding (parsing and analyzing) algorithms can be used to process text to determine importance factors which are used to select keywords. E-mail/text documents can be fed directly to such algorithms. Faxes could first undergo preprocessing, such as optical character recognition (OCR) of the scanned fax to generate text. The text is then passed to the natural language understanding algorithms to generate keywords.

In a preferred embodiment of the present invention a caller can be given the option of adding queued documents to a master queue, that is, to an overall list of documents selected by that caller. Throughout the session the caller can be given the option of having the documents on the master queue sent to them.

The following examples of administrator set-up and call flow illustrate the invention more fully.

Scenario: Travel Agent offering last minutes sales sets up a FOD (fax on demand) line which allows callers to inquire about sales to specific destinations.

Administrator set-up:

Creates one fax (i.e. a document) for each trip. Faxes are input to CTI device 14 by way of data input interface 34 and stored as data pages in storage device 26. Using a standard template that contains the city, country, and region, the keywords are associated with each page by entering them into data input interface 34 and storing them on table 24. A sample entry of keywords associated with each page might contain the following fields: dates, city, county, region, price, hotel, description of area). Keywords are created based on the city, country and region fields. The following is a list of all Faxes:
1. Negril, Jamaica, Caribbean
2. Kingston, Jamaica, Caribbean
3. Montego Bay, Jamaica, Caribbean
4. Ocho Rios, Jamaica, Caribbean
5. Port Antonio, Jamaica, Caribbean
6. Bridge Town, Barbados, Caribbean
7. Christ Church, Barbados, Caribbean
8. Long Beach, Barbados, Caribbean
9. Mango Bay, Barbados, Caribbean
10. San Juan, Peurto Rico, Caribbean
11. Yabucoa, Peurto Rico, Caribbean
12. London, England, Europe
13. Manchester, England, Europe
14. Dublin, Ireland, Europe
15. Paris, France, Europe
16. Marseilles, France, Europe
17. Nice, France, Europe

The threshold is set to 8 (the maximum number of matches to be presented). For reference the counts of following keywords are provided in the above list.
Caribbean: 11 items
Jamaica: 5 items
Negril: 1 item

### Call-flow:

### Example One:

CTI Device 14: *"Welcome to the Travel Sale Fax on Demand line. Please say the country, city, or region you are interested in. "*
Caller: *"Negril".*
CTI Device 14 uses the above method to match "Negril" against all keywords for the pages of information. Device 14 finds one match only and adds it directly to the master queue.
......... *"There is one sale trip to Negril. It has been added to your selections. Press one to receive your selections now or press two to find out about more trips. "*

In a preferred embodiment of the present invention, a caller who has input a keyword is also presented with the option of receiving not the whole document associated with the keyword but instead an abstract, title or set of keywords associated with the document. If there was more than one document, then the caller could be presented with a list of abstracts, titles, or sets of keywords. The abstract or title could be input through data input interface 34 and then associated with data pages on storage device 26.

The following steps show how a list might be presented to a caller:
a. The caller is asked by a message generated by speech synthesis unit 18 and transmitted over communication network 16 to handset 12 if they wish to receive a list of documents corresponding to the keyword they have input.
b. The caller indicated they wish to receive a list by inputting a command, such as the word "list", or by pressing a particular number on the keypad 32 of Telset 12.
c. Speech recognition unit 20 receives the command, generates a digital signal corresponding to the command, and sends the digital signal to CTI controller 22.
d. CTI controller accesses storage device 26, and queues up a list of titles, abstracts or set of keywords associated with a previously input keyword.
e. CTI device 14 transmits the list to the caller via the speech synthesis unit 18, fax generation device 28, and/or e-mail generation device 30.

Use of this embodiment is described in the following example.

### Example Two:

CTI Device 14: *"Welcome to the Travel Sale Fax on Demand line. Please say the country, city, or region you are interested in. "*
Caller: *"Jamaica".*
CTI device 14 uses the above-described method to match "Jamaica" against all keywords for the application. Finds five matches. Checks thresholds and discovers that for it is less than the maximum to be presented.
CTI device 14: *"There are five trips to Jamaica. To hear a list of all matches press 1. To refine your search press 2. To add these results to a summary list of all matches, press 3. To receive the complete information on all matches press 4, to make another search press 5."*
A caller who presses 1 would hear:
CTI device 14: *"For information on Negril, press 1, for information on Kingston press 2, for information on Ocho Rios press 3*...*"*
A caller who presses 2 would hear:
CTI device 14: *"To narrow your search speak another keyword. The service will search for all information about Jamaica that contain the new keyword. "*
A caller who presses 3 would get a one page list summarizing the matches.
A caller who presses 4 would get many pages with complete details on all matches.

In a preferred embodiment of the present invention, sub-category choices are presented to a caller following an initial search by determining if any documents have common keywords. The following steps show how sub-category choices can be presented to a caller.
I. As part of the first query (steps 1-5 above), a set of documents containing a first keyword queued up for possible transmission to the caller.
II. All other keywords associated with the queued-up documents are read from Table 24 by CTI controller 22.
III. These other keywords are compared with each other. When other keywords from one page match those other keywords from a different page, those matching other keywords are queued up or flagged as sub-category keywords.
IV. If the caller selects a sub-category keyword, documents are queued-up that contain both the first keyword and the selected sub-category keyword.
VI. The caller receives further prompts from the CTI device, to receive information or to further refine a search.

In a further refinement to this preferred embodiment only sub-category keywords found on more than a predetermined number of different documents are presented to the caller. Alternatively, only a predetermined number of sub-category keywords are presented, typically those with the greatest number of documents containing the same common keyword.

This embodiment of the invention is illustrated by the following example.

### Example Three:

CTI Device 14: *"Welcome to the Travel Sale Fax on Demand line. Please say the country, city, or region you are interested in. "*
Caller: *"Carribean"*
CTI device 14 uses the above described method to match "Caribbean" against all keywords for the application. It finds eleven matches. The device 14 then checks thresholds and discovers that it must narrow the search.
CTI device 14: *"There are eleven trips to the Caribbean. To hear a list of sub-categories press 1. To narrow your search press 2. To add a summary list of all matches, press 3.*
A caller who presses 1 would hear (based on a threshold set to display sub-categories with two or more matches).
CTI device 14: *"For information on Jamaica, press 1, for information on Barbados press 2, for information on Peurto Rico press 3."*
A caller who presses 2 would hear:
CTI device 14: *"To narrow your search speak another keyword. The service will search for all information about the Caribbean that contain the new keyword. "* (Saying Negril would take you to scenario 1 and Jamaica to scenario 2). A caller who presses 3 would get a one page list summarizing the matches.

### Example 4:

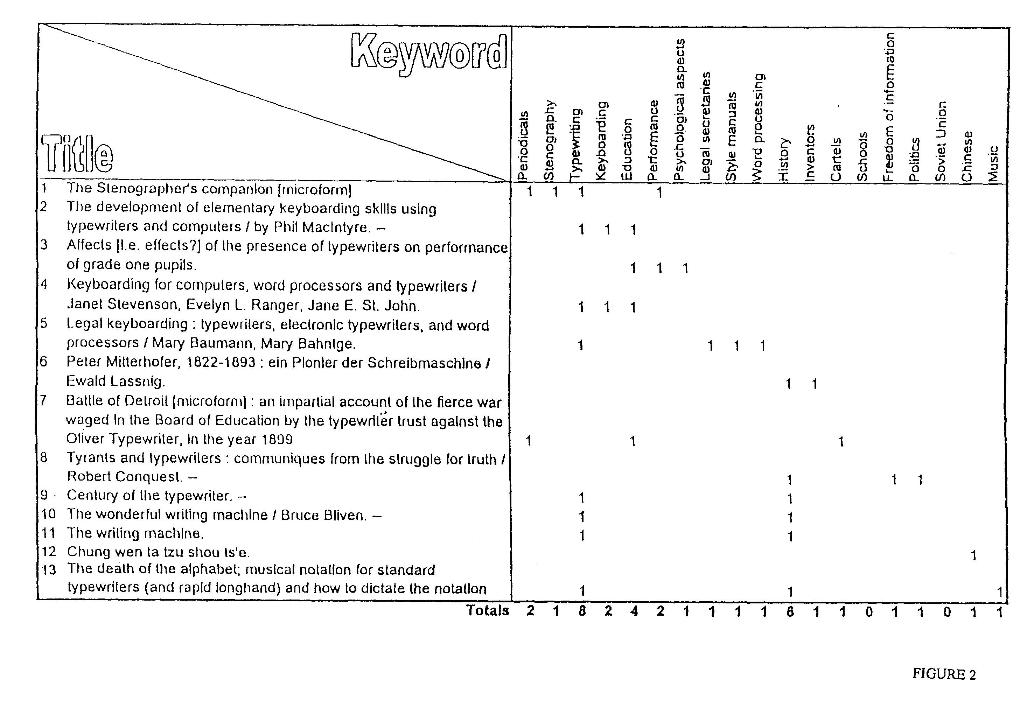

Example 4 serves to illustrate how an embodiment of the present invention would use more random keywords. Figure 2 shows a chart with 13 book titles which have a common
keyword "typewriters". The chart also shows a number of other key words associated with some but not all of the 13 titles: periodicals, stenography, typewriting, keyboarding,
education, performance, psychological aspects, legal secretaries, style manuals, word processor, history, inventors, cartel, schools, freedom of information, politics, Soviet Union, Chinese, and music. When a caller speaks the keyword "typewriters" the preferred embodiment first locates the 13 titles. Then it attempts to help the caller find the book he or she is looking for by presenting additional keywords to narrow the search. In order to help the caller find the book most easily, the present embodiment attempts to break the list as closely in half as possible. In this example with 13 titles matching the "typewriters" keyword the three keywords that would break the list closest in half, that is six and a half titles matching the additional keyword versus six and a half titles not matching the keyword are the keyword "history" with six matches, the keyword "typewriting" with eight matched and the keyword "education" with four matches. In the preferred embodiment these keywords are presented to the caller. As in the above examples, the caller could receive a list of titles or narrow a search with a new keyword. This example shows that in a preferred embodiment a CTI application can be presented that allows a caller to navigate large collections of data with less work on the part of the administrator. A sample calling session using the data set out in figure 2 is described below.
System: *"Welcome to Nile Online Bookstore. Would you like to search by subject or title?"*
Caller: *"Subject"*
System: *"Please say a keyword for the title search. "*
Caller: *"Typewriters"*
System: *"We have 13 books with the subject: typewriters. You can narrow your search at any time by saying a new keyword. To hear the list of titles, press 1. To hear more keywords associated with these items, press 2. To start a new search, press 9.*"
Caller: < *presses 2* >
System: *"The following keywords may help you narrow your search: periodicals, keyboarding, performance. You can narrow your search at any time by saying a new keyword. To hear more keywords associated with these items, press 2. To start a new search, press 9.* "
Caller: *"Keyboarding* "
System: *"We have 2 books with the subject: typewriters and keyboarding. To hear the list of titles, press 1. To hear more keywords associated with these items, press 2. To start a new search, press 9.* "
Caller: < *presses 1* >
System: *"For 'The development of elementary keyboarding skills using typewriters and computers by Phil Maclntyre', press 1, for 'Keyboarding for computers, word processors and typewriters by Janet Stevenson' press 2. To start a new search, press 9.* "
Caller: < *presses 1* >
System: *"To order this book, press 1. To hear more information about this book, press 2.* "

As well as receiving simple words, callers could input phrases. Speech recognition unit 20 would receive these phrases and generate a corresponding digital signal. This signal could be input into natural language understanding algorithms to extract keywords and boolean operators. These keywords and boolean operators could then be used to select keywords from associated table 24.

Other modifications will be apparent to those skilled in the art and, therefore, the invention is defined in the claims.

## Claims

1. A method for selectively retrieving information stored in a computer telephony integration device,
wherein said information is stored as at least one document; and
at least one keyword is associated with each of said documents;
said associated keywords forming a list;
said method comprising the steps of:
prompting a caller to speak at least one keyword;
receiving said spoken keyword from said caller;
comparing said spoken keywords with said list of keywords associated with said documents; and
communicating to said caller said documents associated with said spoken keywords.

2. The method of claim one wherein said transmitted documents are transmitted to said caller by at least one of a pre-recorded voice message, a synthesized voice message, a facsimile, or an e-mail message.

3. The method for retrieving information stored in a computer telephony integration device, according to claim 1 or claim 2, further comprising
queuing on a master queue said documents associated with said spoken keywords; and
wherein the step of transmitting involves:
communicating to said caller said documents on said master queue.

4. The method of claim 3 further comprising the steps of:
inputting and storing a threshold number;
prompting said caller to speak a second keyword if the number of documents associated with a first spoken keyword exceeds said threshold number.

5. The method for retrieving information stored in a computer telephony integration device or according to any preceding claim, wherein:
each of said documents is associated with an abstract, the method further comprising:
queuing on a master queue abstracts associated with said documents associated with said spoken keywords on a master queue; and,
communicating to said caller said abstracts on said master queue.

6. The method of claim 5, further comprising:
prompting said caller to select at least one abstract;
receiving a command from said caller corresponding to the selected abstracts; and
communicating to said caller documents associated with said selected abstracts.

7. The method of claim 5, further comprising:
(a) prompting said caller to select at least one abstract;
(b) receiving a command from said caller corresponding to the selected abstracts; and
(c) queuing on a master queue documents associated with said selected abstracts;
(d) transmitting to said caller said associated documents said master queue.

8. The method for retrieving information stored in a computer telephony integration device according to any preceding claim, wherein:
at least two keywords are associated with each of said documents and said associated keywords form a list, the method further comprising
identifying a set of documents associated with said spoken keywords;
comparing other keywords associated with documents in said set of documents;
creating a list of subcategory keywords comprising other keywords in one document in said set of documents which match other keywords in at least one other document in said set of documents; and
communicating said list to said caller.

9. A computer telephony integration device comprising:
means for storing at least one document;
means for associating each of said documents with at least one keyword;
means for forming a list of said associated keywords;
means for prompting a caller to speak at least one keyword;
means for receiving said spoken keywords from said caller;
means for comparing said spoken keywords to a list of keywords associated with said documents; and
means for transmitting to said caller said documents associated with said spoken keywords.
